# EUROPÄISCHE PATENTSCHRIFT

(11) **EP 1 976 027 B1**
(45) Veröffentlichungstag und Bekanntmachung des Hinweises auf die Patenterteilung: **09.01.2013**
(21) Anmeldenummer: 08102626.2
(22) Anmeldetag: 14.03.2008
(51) Int. Cl.: H01L 31/048, H01R 9/22

(54) **Paneldose**
Junction box
Boîtier de jonction

(30) Priorität: 28.03.2007 DE 102007015363; 02.05.2007 DE 102007020845
(43) Veröffentlichungstag der Anmeldung: 01.10.2008
(73) Patentinhaber: Günther Spelsberg GmbH & Co. KG, 58579 Schalksmühle (DE); Multi-Holding AG, 4123 Allschwil (CH)
(72) Erfinder: Gerull, Walter, 58579, Schalksmühle (DE); Bürge-Allenspach, Anton, 4466, Ormalingen (CH)
(74) Vertreter: Michalski Hüttermann & Partner

(56) Entgegenhaltungen:
- WO-A-2006/057342
- JP-A- 2003 197 944
- JP-A- 2006 165 017
- US-A1- 2004 261 835
- US-B1- 6 344 612

## Beschreibung

Die Erfindung betrifft eine Paneldose, zum elektrischen Anschluß eines Photovoltaik-Moduls für eine Solaranlage, mit einem Basisteil zum Anbringen auf dem Photovoltaik-Modul und zum elektrischen Anschließen einer Anschlußleitung des Photovoltaik-Moduls. Eine derartige Paneldose ist z. B. aus der EP 1 672 702 A1 bekannt.

Ein Photovoltaik-Modul besteht im allgemeinen aus zusammengeschalteten Solarzellen und wird auch Solarzellenpanel genannt. Die Ausgangsspannung eines einzelnen Photovoltaik-Moduls ist im allgemeinen zu gering, um elektrische Geräte zu betreiben, so daß in Solaranlagen mehrere Photovoltaik-Module zusammengeschaltet werden. Im allgemeinen werden die Photovoltaik-Module dabei in Reihe geschaltet. Dabei kann sich jedoch ein Problem ergeben, wenn ein Photovoltaik-Modul partiell abgeschattet wird. Bekanntermaßen erzeugt ein abgeschattetes Photovoltaik-Modul keine Spannung mehr und setzt dem Stromfluß praktisch eine Diode in Sperrichtung entgegen. Damit kann jedoch insgesamt kein Strom mehr fließen, so daß die Funktion der gesamten Anlage beeinträchtigt ist.

Um diesem Problem abzuhelfen, werden bei der Zusammenschaltung von Photovoltaik-Modulen zu einer Solaranlage in Paneldosen vorgesehene Bypass-Dioden verwendet, die antiparallel zu den Photovoltaik-Modulen geschaltet werden. Auf diese Weise wird erreicht, daß ein abgeschattetes Photovoltaik-Modul zwar keinen Anteil mehr zur Gesamtspannung der Solaranlage mehr leistet, der Stromfluß insgesamt jedoch trotzdem erhalten bleibt, so daß sich lediglich eine verminderte Betriebsspannung ergibt. Eine Beschädigung des abgeschatteten Photovoltaik-Moduls wird damit ebenfalls vermieden.

Bei herkömmlichen Paneldosen wird bisher derart vorgegangen, daß diese vollständig bestückt, also insbesondere mit wenigstens einer Bypass-Diode und mit Anschlußkabeln für das Photovoltaik-Modul versehen, auf diesem befestigt werden. Über einen abnehmbaren Deckel ist das Innere der Paneldose zugänglich, so daß Anschlußleitungen des Photovoltaik-Moduls angeschlossen werden können. Ferner erhält man auf diese Weise Zugang zu den Bypass-Dioden, die auf diese Weise bei einem Defekt gewechselt werden könnten.

In diesem Zusammenhang sei darauf hingewiesen, daß vorliegend mit "Anschlußleitung" eine Leitung gemeint ist, die direkt mit den Solarzellen verbunden ist und zum elektrischen Anschließen des Photovoltaik-Moduls aus diesem herausgeführt und dort weiter kontaktierbar ist. Im Gegensatz dazu ist vorliegend mit "Anschlußkabel" ein Kabel gemeint, das der Paneldose verbraucherseitig oder von einem anderen Photovoltaik-Modul her zugeführt ist und in der Paneldose weiter kontaktiert wird.

Ein Wechsel von Bypass-Dioden bei einer sich bereits im Betrieb befindlichen Solaranlage wird im allgemeinen jedoch nicht durchgeführt. Da sich die Photovoltaik-Module häufig an nur schlecht zugänglichen Orten, wie auf Häuserdächern, befinden, wäre ein Austausch sehr aufwendig und mitunter auch gefährlich. Auch ein Austausch der gesamten Paneldose ist nicht unproblematisch, da beim Wechsel der Dose häufig keine Abdichtung der Austrittsstellen der Anschlußleitungen des Phatovoltaik-Moduls mehr gewährleistet werden kann.

Im Ergebnis wird daher bei einem Defekt in der Paneldose häufig das gesamte Photovoltaik-Modul ausgetauscht. Wenn damit auch ein zuverlässiger Weiterbetrieb der Solaranlage gewährleistet werden kann, so ist dies jedoch ineffizient und teuer.

Die WO 2006/057342 A beschreibt eine Paneldose zum elektrischen Anschluss eines Photovoltaik-Moduls für eine Solaranlage, zum Anbringen auf dem Photovoltaik-Modul und zum elektrischen Anschließen einer Anschlussleitung des Photovoltaik-Moduls. Die Paneldose umfasst ein Modulgehäuse sowie einen Deckel, wobei das Modulgehäuse eine Öffnung aufweist, durch welche die Anschlussleitungen in das Modulgehäuse eingeführt und mit den Leitungen innerhalb der Paneldose mittels Lötverfahren verbunden. Die Paneldose wird auf das Photovoltaik-Modul aufgebracht, wo die Anschlussleitungen innerhalb der Paneldose mit den Leitungen verbunden werden. Anschließend wird das Modulgehäuse vollständig mit Vergussmaterial vergossen, wobei das Vergussmaterial auch die Anschlussleitungen und Leitungen verschließt. Anschließend wird der Deckel auf das Modulgehäuse montiert.

Es ist die Aufgabe der Erfindung, eine derartige Paneldose anzugeben, mit der ein sicheres Anschließen der Anschlußleitung des Photovoltaik-Moduls gewährleistet werden kann.

Ausgehend von der eingangs beschriebenen Paneldose ist diese Aufgabe durch den Gegenstand von Anspruch 1.

Erfindungsgemäß ist also eine derartige Paneldose vorgesehen, die so ausgestaltet ist, daß sie mit ihrem Boden nicht in allen Bereichen direkt auf dem Photovoltaik-Modul aufliegt. Vielmehr ist ein Bereich vorgesehen, in dem sich eine Ausnehmung befindet, die mit einem Vergußmaterial gefüllt werden kann. Dies ermöglicht es, einen Bereich auf dem Photovoltaik-Modul mit dem Vergußmaterial zu bedecken, so daß dort z. B. eine feuchtigkeitsdichte Abdichtung erzielt werden kann. Zum Herausführen der Anschlußleitung aus dem Photovoltaik-Modul muß im allgemeinen nämlich eine Schutzschicht verletzt werden, so daß grundsätzlich die Problematik des Eindringens von Feuchtigkeit in das Photovoltaik-Modul besteht, die dieses beschädigen kann. Mit der Erfindung kann diesem Problem abgeholfen werden.

Grundsätzlich kann die vergießbare Ausnehmung an unterschiedlichen Stellen auf dem Boden des Basisteils vorgesehen sein. Gemäß einer bevorzugten Weiterbildung der Erfindung ist jedoch vorgesehen, daß die vergießbare Ausnehmung derart angeordnet ist, daß bei auf dem Photovoltaik-Modul angebrachtem Basisteil der Austrittsbereich der Anschlußleitung aus dem Photovoltaik-Modul vergießbar ist. Gemäß dieser bevorzugten Weiterbildung der Erfindung wird also eine derartige Paneldose bereitgestellt, die eine sichere Abdichtung des Bereichs des Photovoltaik-Moduls gewährleistet, in dem die Anschlußleitung aus dem Photovoltaik-Modul heraustritt. Dazu wird die Paneldose entsprechend positioniert, und die Ausnehmung wird entsprechend in abdichtender Weise mit einem Dichtmaterial vergossen. Dazu sind grundsätzliche alle bekannten Spritz- und Gießverfahren einsetzbar. Dieser Ausgestaltung kommt insbesondere dann wesentliche Bedeutung zu, wenn eine Mehrzahl von Anschlußleitungen vorgesehen ist, so daß dann eine entsprechend ausgestaltete gemeinsame vergießbare Ausnehmung vorgesehen ist oder mehrere vergießbare Ausnehmungen vorgesehen sind, die insgesamt alle Austrittsbereiche der Anschlußleitungen abdecken.

Grundsätzlich ist das Vergußmaterial der Ausnehmung auf verschiedene Weisen zuführbar. Gemäß einer bevorzugten Weiterbildung der Erfindung ist jedoch vorgesehen, daß der Boden eine zusätzliche Öffnung aufweist, die zum Zuführen des Vergußmaterials vorgesehen ist. Gemäß einer bevorzugten Weiterbildung der Erfindung ist ferner vorgesehen, daß der Boden auch eine derartige zusätzliche Öffnung aufweist, die beim Gießen als Steiger verwendbar ist. Über diesen Steiger kann das Vergußmaterial also wieder aus der Ausnehmung austreten, was beim Vergießen der Ausnehmung unter anderem zu der Feststellung dient, daß die Ausnehmung vollständig ausgegossen ist.

Grundsätzlich kann es ausreichend sein, daß die geometrische Anordnung einer vergießbaren Ausnehmung bzw. einer Mehrzahl von vergießbaren Ausnehmungen sich an den Austrittsbereichen der Anschlußleitungen aus dem Photovoltaik-Modul orientiert. Erfindungsgemäß ist ferner vorgesehen, daß die vergießbaren Ausnehmung auch eine in dem Boden des Basisteils vorgesehene Durchgangsöffnung für die Anschlußleitung des Photovoltaik-Moduls umfaßt. Auf diese Weise wird erreicht, daß die Durchgangsöffnung zumindest teilweise mitausgegossen wird, so daß eine optimale Abdichtungsfunktion erzielt wird. Insbesondere kann dabei vorgesehen sein, daß die jeweilige Durchgangsöffnung genau über dem Austrittsbereich der Anschlußleitung des Photovoltaik-Moduls angeordnet ist, was eine besonders einfache und insbesondere auch automatisierte Einführung der Anschlußleitung in das Basisteil der Paneldose ermöglicht.

Gemäß einer bevorzugten Weiterbildung der Erfindung ist ferner in der Durchgangsöffnung eine Umlenkzunge vorgesehen, die derart angeordnet und ausgebildet ist, daß die Anschlußleitung beim Einführen in die Durchgangsöffnung umgelenkt wird. Vorzugsweise ist die Umlenkzunge derart ausgebildet und angeordnet, daß sie eine Umlenkung der Anschlußleitung beim Einführen in die Durchgangsöffnung in einem Winkelbereich von 10° bis 80°, vorzugsweise von 30° bis 60°, bewirkt. Diese Umlenkzunge bewirkt also, daß eine im allgemeinen in Form eines Leiterbandes vorliegende Anschlußleitung, die im wesentlichen senkrecht aus einem Photovoltaik-Modul austritt, beim Einführen in die Durchgangsöffnung um einen entsprechenden Winkel umgelenkt wird. Dies erleichtert die Kontaktierung der Anschlußleitung mit einer Anschlußeinrichtung, wie weiter unten beschrieben.

Grundsätzlich kann die Paneldose lediglich von dem Basisteil gebildet werden. Gemäß einer bevorzugten Weiterbildung der Erfindung ist jedoch ein weiteres Teil zum Aufsetzen auf das Basisteil vorgesehen. Dabei ist vorzugsweise insbesondere vorgesehen, daß das weitere Teil als Funktionsteil ausgestaltet ist, das wenigstens eine eine elektrische und/oder elektronische Funktion übernehmende Funktionseinrichtung aufweist.

Grundsätzlich ist es denkbar, das Funktionsteil auf verschiedene Weisen auf dem Photovoltaik-Modul zu befestigen. Gemäß einer bevorzugten Weiterbildung der Erfindung ist jedoch vorgesehen, daß das Funktionsteil ausschließlich mittels des Basisteils an dem Photovoltaik-Modul befestigbar ist. Dies hat den Vorteil, daß am Photovoltaik-Modul selbst nach Anbringung des Basisteils keine Maßnahmen mehr vorgenommen werden müssen, um die Paneldose vollständig zu befestigen. Vielmehr stellt das Basisteil alle erforderlichen Funktionen hinsichtlich Befestigung und elektrischem Anschluß bereit, so daß Anschluß und Befestigung auch zu keiner Beschädigung des Photovoltaik-Moduls führen können.

Als Funktionseinrichtungen können verschiedene Einrichtungen vorgesehen sein. Gemäß einer bevorzugten Weiterbildung der Erfindung ist als Funktionseinrichtung wenigstens eine Bypass-Diode vorgesehen; im allgemeinen sind mehrere Bypass-Dioden vorgesehen. Zusätzlich oder alternativ dazu kann als Funktionseinrichtung auch eine elektrische oder elektronische Schutzschaltung für das Photovoltaik-Modul vorgesehen sein. Zuletzt sind nämlich derartige Schutzschaltungen bekannt geworden, die von ihrer Funktion her Bypass-Dioden ersetzen können, wobei jedoch wesentlich höhere Ströme absicherbar sind.

Als in dem Funktionsteil vorgesehene Funktionseinrichtung kann gemäß einer bevorzugten Weiterbildung der Erfindung auch ein Anschlußkabel für das Photovoltaik-Modul vorgesehen sein. Im allgemeinen werden vorzugsweise wenigstens zwei Anschlußkabel vorgesehen sein. Es ist gemäß einer bevorzugten Weiterbildung der Erfindung ferner vorgesehen, daß als Funktionseinrichtung eine Anschlußeinrichtung für das Anschlußkabel vorgesehen ist.

Eine derartige Anschlußeinrichtung kann auf unterschiedliche Weisen ausgestaltet sein. Gemäß einer bevorzugten Weiterbildung der Erfindung ist jedoch vorgesehen, daß die Anschlußeinrichtung ein Röhrchen aufweist, vorzugsweise von einem Röhrchen gebildet ist, in das eine Leitungsader des Anschlußkabels eingeführt ist. Dabei ist es gemäß einer bevorzugten Weiterbildung der Erfindung ferner vorgesehen, daß die Leitungsader im Röhrchen mittels einer Verkrimpung elektrisch kontaktiert und vorzugsweise auch gehalten ist. Das Vorsehen der Anschlußeinrichtung in Form eines entsprechenden Röhrchens ist konstruktiv sehr einfach, ermöglicht einen sicheren Anschluß der Leitungsader des Anschlußkabels und gewährleistet zusätzlich eine besonders gute Wärmeableitung. Diese besonders gute Wärmeableitung resultiert dabei einerseits daraus, daß vorzugsweise relativ massive Röhrchen verwendet werden. Andererseits gilt jedoch auch, daß für die Wärmeableitung die runde Form der Röhrchen besser ist als flache Formen.

Zum Anschließen der Anschlußleitung des Photovoltaik-Moduls können unterschiedliche Einrichtungen vorgesehen sein. Gemäß einer bevorzugten Weiterbildung der Erfindung ist jedoch vorgesehen, daß im Basisteil zum elektrischen Anschließen der Anschlußleitung des Photovoltaik-Moduls eine Verbindungseinrichtung bereitgestellt ist, mittels derer die Anschlußeinrichtung mit der Anschlußleitung verbindbar ist. Vorzugsweise erfolgt eine direkte Kontaktierung der Anschlußeinrichtung, z. B. in Form des oben angesprochenen Röhrchens, mit der Anschlußleitung des Photovoltaik-Moduls.

Gemäß einer bevorzugten Weiterbildung der Erfindung kann diesbezüglich insbesondere vorgesehen sein, daß als Verbindungseinrichtung eine Federklammer vorgesehen ist, mittels derer die Anschlußleitung an der Anschlußeinrichtung angepreßt wird. Auch hier ist das Vorsehen der Anschlußeinrichtung in Form eines Röhrchens vorteilhaft, da dieses senkrecht zu seiner Längserstreckung auf einfache und sichere Weise in eine entsprechend ausgestaltete Federklammer eingefügt und in dieser gehalten werden kann.

Gemäß einer bevorzugten Weiterbildung der Erfindung ist ferner vorgesehen, daß eine Bypass-Diode direkt mit der Anschlußeinrichtung verbunden ist. Insbesondere ist es dabei bevorzugt, daß die Anschlußeinrichtung ein Röhrchen mit einem abgeflachten Bereich aufweist, in dem die Bypass-Diode aufgeschweißt oder aufgelötet sein kann.

Grundsätzlich kann das Funktionsteil unterschiedlichen geometrischen Formen folgen. Gemäß einer bevorzugten Weiterbildung der Erfindung ist jedoch vorgesehen, daß das Funktionsteil als Haube ausgebildet ist. Auf diese Weise stellt das Funktionsteil praktisch ein mit einem Deckel verschließbares Gehäuse dar, so daß insbesondere aufgrund der Seitenwände der Haube ein guter Schutz der in dem Funktionsteil vorgesehenen Funktionseinrichtungen bei Herstellung, Transport und Installation gewährleistet ist. Die Funktion des Deckels übernimmt dann das auf dem Photovoltaik-Modul befestigte Basisteil. Insbesondere ist gemäß einer bevorzugten Weiterbildung der Erfindung dabei vorgesehen, daß durch Aufsetzen des Funktionsteils auf das Basisteil die Paneldose verschließbar ist, insbesondere in hermetisch dichter Form.

Darüber hinaus ist gemäß einer bevorzugten Weiterbildung der Erfindung vorgesehen, daß die Höhe des Funktionsteils in einem Randbereich geringer ist als in seinem restlichen Bereich, das Funktionsteil also einen Absatz aufweist. Auf diese Weise kann die Paneldose z.B. teilweise unter einen das Photovoltaik-Modul begrenzenden Metallrahmen geschoben werden, so daß eine möglichst randnahe und damit platzsparende Installation auf dem Photovoltaik-Modul erzielt wird.

Weiterhin ist es bei Paneldosen problematisch, daß diese mitunter starken mechanischen Belastungen ausgesetzt sind, nämlich sowohl bei Transport und Installation als auch bei ihrem Einsatz im Betrieb der Solaranlage. Insbesondere bei sehr tiefen Temperaturen werden typische für Paneldosen verwendete Kunststoffmaterialien häufig spröde, so daß schon moderate Stöße zu einer Beschädigung der Paneldose führen können.

Es ist daher auch die Aufgabe der Erfindung, eine derartige Paneldose anzugeben, die gegen Stöße möglichst unempfindlich ist.

Ausgehend von der eingangs beschriebenen Paneldose ist diese Aufgabe dadurch gelöst, daß zur Abdichtung der Paneldose zwischen dem Basisteil und einem weiteren Teil, wie einem Funktionsteil, eine Dichtung vorgesehen ist, die derart ausgebildet und angeordnet ist, daß ein auf das weitere Teil ausgeübter Stoß abgefedert wird.

Gemäß diesem Aspekt der Erfindung wirkt die Dichtung also nicht nur zur Abdichtung des Innenraums der Paneldose vor z. B. Feuchtigkeit, sondern gewährleistet auch einen mechanischen Schutz. Wird das auf das Basisteil aufgesetzte Teil nämlich von einem Stoß getroffen, so wird dieser mittels der Dichtung abgefedert, was insbesondere bei bei aufgrund von tiefen Temperaturen spröde gewordenem Material des weiteren Teils einer Beschädigung desselben aber auch der Paneldose insgesamt sowie der darin enthaltenen Bauteile entgegenwirken kann.

Gemäß einer bevorzugten Weiterbildung der Erfindung ist dabei vorgesehen, daß die Dichtung seitlich gegen Seitenwände des weiteren Teils abdichtet und das weitere Teil Rippen aufweist, mit denen es derart auf der Dichtung aufliegt, daß sich die Seitenwände im Abstand zum Basisteil befinden. Auf diese Weise ergibt sich eine federnde Lagerung des weiteren Teils auf dem Basisteil, bei dem die Abdichtungsfunktion, die seitlich wirkt, gegenüber der Federfunktion, die senkrecht dazu wirkt, funktional getrennt sind. Damit wird die Abdichtfunktion durch die zusätzliche Federfunktion nicht beeinträchtigt.

Nachfolgend wird die Erfindung anhand eines bevorzugten Ausführungsbeispiels unter Bezugnahme auf die Zeichnung im Detail erläutert. In der Zeichnung zeigt
- Fig. 1: eine Paneldose gemäß einem bevorzugten Ausführungsbeispiel der Erfindung mit einem Basisteil und einem darauf aufgesetzten Funktionsteil,
- Fig. 2: das Funktionsteil der Paneldose gemäß dem bevorzugten Ausführungsbeispiel der Erfindung mit Funktionseinrichtungen,
- Fig. 3: das Basisteil der Paneldose gemäß dem bevorzugten Ausführungsbeispiel der Erfindung,

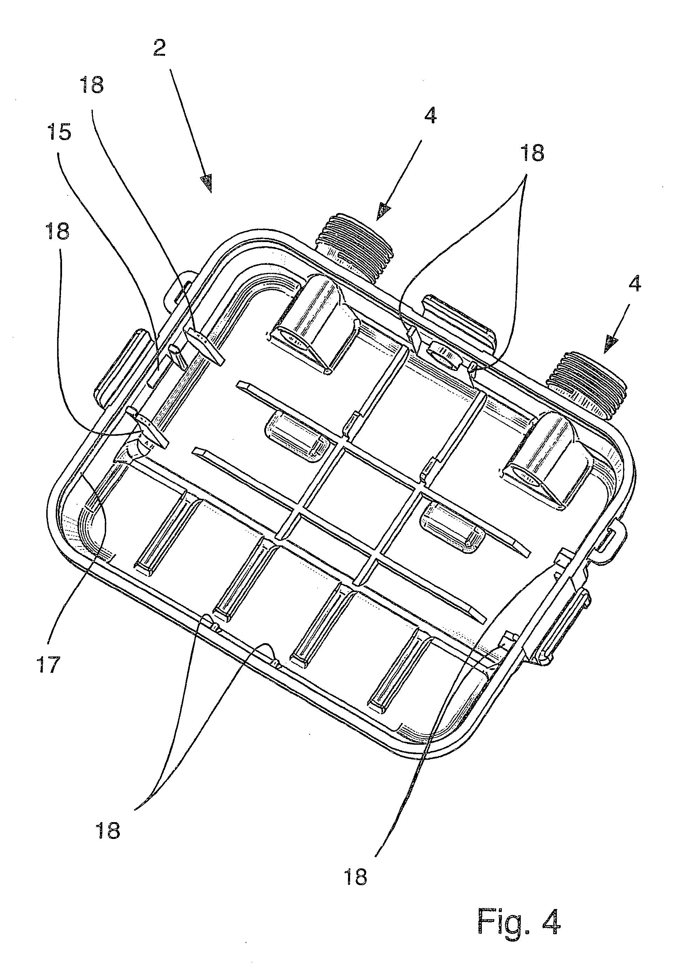

- Fig. 4: das Funktionsteil der Paneldose gemäß dem bevorzugten Ausführungsbeispiel der Erfindung ohne zusätzliche Einrichtungen,
- Fig. 5: die Trägereinrichtung mit den darin angeordneten Anschlußeinrichtungen der Paneldose gemäß dem bevorzugten Ausführungsbeispiel der Erfindung und
- Fig. 6: das Basisteil der Paneldose gemäß dem bevorzugten Ausführungsbeispiel der Erfindung von seiner zur Befestigung auf einem Photovoltaik-Modul vorgesehenen Seite her.

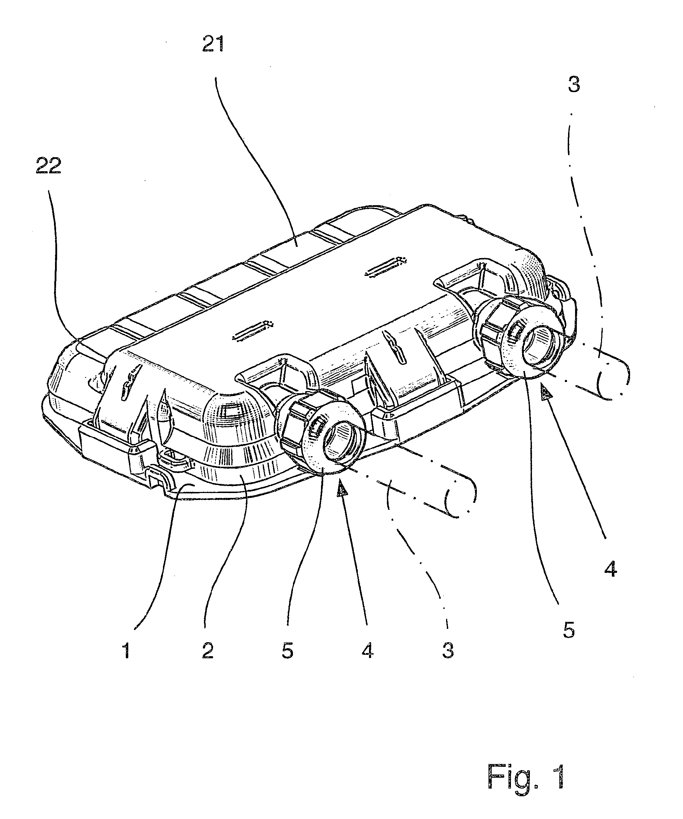

Aus Fig. 1 ist in zusammengesetztem Zustand eine Paneldose gemäß einem bevorzugten Ausführungsbeispiel der Erfindung in perspektivischer Darstellung ersichtlich. Diese Paneldose dient zum elektrischen Anschluß eines nicht weiter dargestellten Photovoltaik-Moduls einer Solaranlage, wobei ein Basisteil 1 zum Anbringen auf dem Photovoltaik-Modul und zum elektrischen Anschließen einer ebenfalls nicht weiter dargestellten Anschlußleitung des Photovoltaik-Moduls und als weiteres Teil ein Funktionsteil 2 vorgesehen sind, das auf das Basisteil 1 aufgesetzt ist.

Das Funktionsteil 2 weist mehrere Funktionseinrichtungen auf, die jeweils eine elektrische oder/und elektronische Funktion übernehmen. Derartige Funktionseinrichtungen stellen vorliegend z. B. zwei Anschlußkabel 3 dar, mittels derer das Photovoltaik-Modul über die Paneldose elektrisch angeschlossen werden kann. Diese Anschlußkabel 3 sind über Kabeleinführungsöffnungen 4 in das Funktionsteil 2 der Paneldose eingeführt. Als Zugentlastung ist jeweils eine Kabelverschraubung 5 vorgesehen, die auf die Isolierung des Anschlußkabels 3 wirkt.

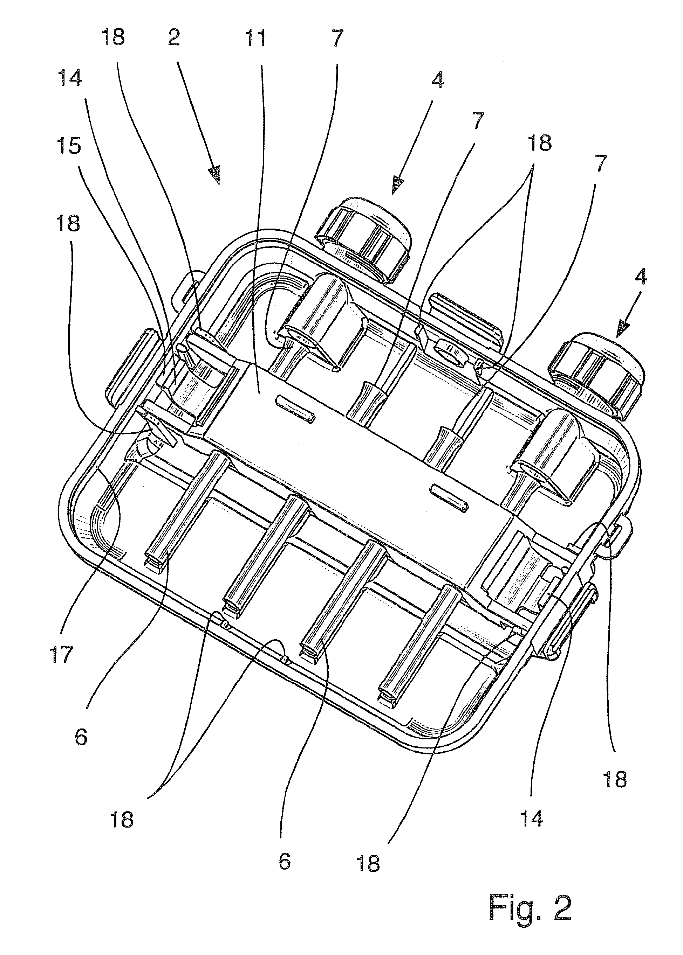

Als jeweils eine elektrische Funktion übernehmende Funktionseinrichtungen sind ferner Anschlußeinrichtungen 6 in Form von Röhrchen vorgesehen. Diese Röhrchen weisen jeweils an einem Ende einen erweiterten Öffnungsbereich 7 auf, wie insbesondere Fig. 2 entnehmbar. Dabei sind zwei dieser Anschlußeinrichtungen 6 mit ihrem erweiterten Öffnungsbereich 7 jeweils so angeordnet, daß eine Leitungsader eines durch die Kabeleinführungsöffnung 4 eingeführten Anschlußkabels 3 auf einfache und sichere Weise in das Innere der Röhrchen einführbar ist. Ein elektrischer Kontakt zwischen der Leitungsader und dem Röhrchen sowie ein Halten der Leitungsader in dem Röhrchen kann dann mittels Verkrimpen erfolgen.

Ein derartiges Verkrimpen ist auch im Rahmen einer automatisierten Bestückung des Funktionsteils 2 mittels eines Roboters gut handhabbar. Zur Sicherstellung, daß bei einer solchen automatisierten Bestückung die Leiterader des Anschlußkabels 3 tatsächlich in das Röhrchen eingeführt worden ist, sind im übrigen optische Verfahren anwendbar, die z.B. einen Spalt zwischen der Kabeleinführungsöffnung 4 und dem erweiterten Öffnungsbereich 7 des Röhrchens daraufhin überwachen, ob die Isolierung der Leiterader sichtbar wird.

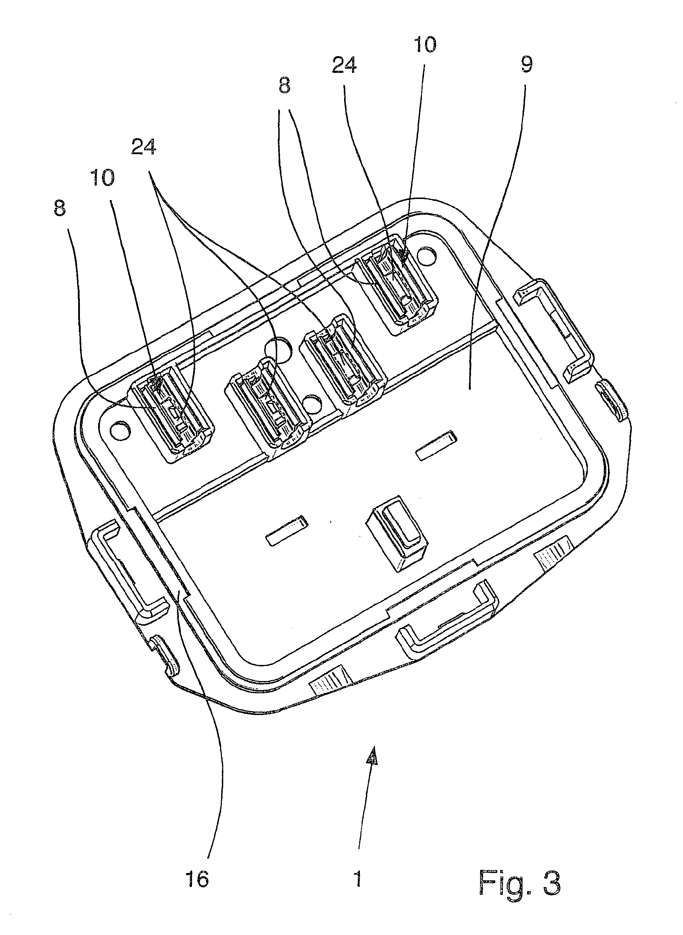

Aus Fig. 3 ist das Basisteil 1 der Paneldose gemäß dem bevorzugten Ausführungsbeispiel der Erfindung vor Aufsetzen des Funktionsteils 2 ersichtlich. Das Basisteil 1 weist vier Federklammern 8 auf. Diese Federklammern 8 sind jeweils oberhalb einer in dem Boden 9 des Basisteils 1 vorgesehenen Durchgangsöffnung 10 angeordnet. Die Anordnung der Durchgangsöffnungen 10 zueinander ist derartig, daß diese sich jeweils oberhalb des Austrittsbereichs einer jeweiligen Anschlußleitung des Photovoltaik-Moduls befinden. Bei entsprechender Vorbereitung der Anschlußleitungen des Photovoltaik-Moduls kann das Basisteil 1 damit derart auf das Photovoltaik-Modul aufgesetzt werden, daß die Anschlußleitungen des Photovoltaik-Moduls, die häufig in Form von dünnen Flachbändern ausgestaltet sind, automatisch durch die Durchgangsöffnungen 10 eingeführt werden.

In jeder Durchgangsöffnungen 10 ist jeweils eine Umlenkzunge 24 vorgesehen, die dafür sorgt, daß eine im allgemeinen in Form eines Leiterbandes vorliegende Anschlußleitung, die im wesentlichen senkrecht aus einem Photovoltaik-Modul austritt, um einen Winkel von ca. 45° beim Einführen in die Durchgangsöffnung 10 umgelenkt wird. Eine Verbindung der Anschlußleitungen des Photovoltaik-Moduls mit den Anschlußeinrichtungen 6 des Funktionsteils 2 in Form von Röhrchen erfolgt nun beim Aufsetzen des Funktionsteils 2 auf das Basisteil 1, indem die Röhrchen in einer Richtung senkrecht zu ihrer Längserstreckung in die als Federklammern ausgebildete Verbindungseinrichtungen 8 eingesetzt werden. Mittels der Federklammern werden die Flachbänder damit auf verläßliche Weise direkt mit den Röhrchen kontaktiert, so daß die Verbindungseinrichtungen 8 selbst keinen besonderen Anforderungen an die elektrische Leitfähigkeit genügen müssen, insbesondere also aus einfachem Federbandstahl hergestellt sein können. Dabei gewährleisten die Umlenkzungen 24, daß die Flachbänder nicht einfach nach unten weggedrückt werden können, da die Flachbänder wegen der Umlenkzungen 24 im allgemeinen bereits schon seitlich an den Federklammern anliegen.

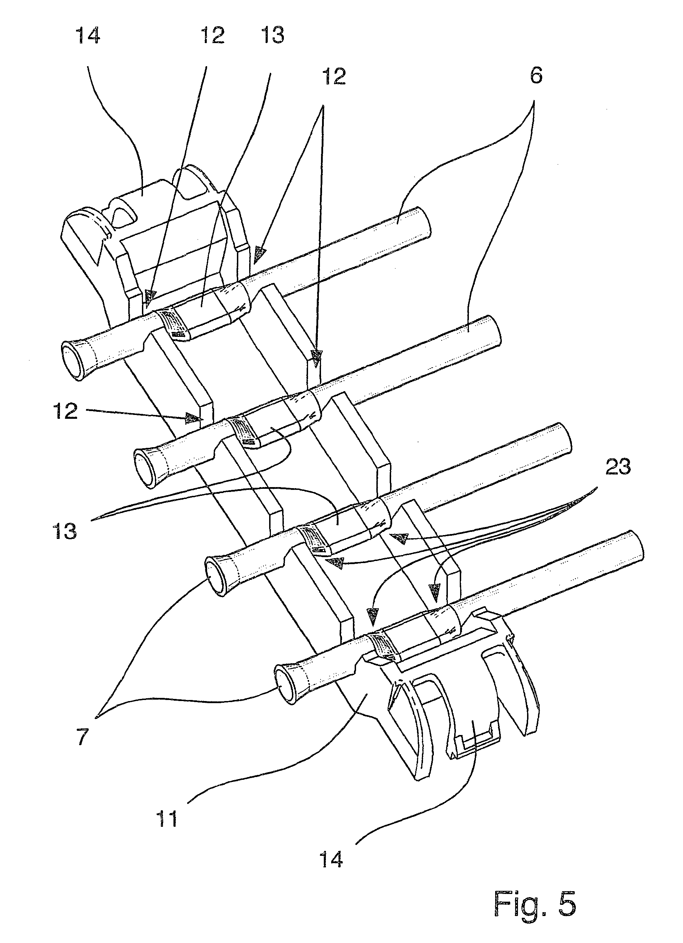

Um die Anschlußeinrichtungen 6 in Form von Röhrchen in dem Funktionsteil 2 zu halten, ist ein Trägerelement 11 vorgesehen, wie aus Fig. 2 und im Detail aus Fig. 5 ersichtlich. Dieses Trägerelement 11 weist Ausnehmungen 12 auf, in denen die Anschlußeinrichtungen 6 verrastet sind. Um einen Verdrehschutz der Anschlußeinrichtungen 6 zu gewährleisten und um darüber hinaus eine einfache Anschlußmöglichkeit für nicht weiter dargestellte Bypass-Dioden bereitzustellen, sind die Anschlußeinrichtungen 6 im Bereich des Trägerelements 11 jeweils mit einer Abflachung 13 versehen. Im Bereich dieser Abflachung 13 kann auf einfache und verläßliche Weise eine Bypass-Diode durch Verlöten oder Verschweißen befestigt werden. Diese Art der Befestigung ermöglicht es im übrigen auch, ganz unterschiedliche Typen von Bypass-Dioden zu verwenden.

Als Verdrehschutz kann auch vorgesehen sein, daß der weiter oben beschriebene erweiterte Öffnungsbereich 7 der Röhrchen nach außen hin nicht kreisrund sondern eckig, z.B. quadratisch, ausgebildet, sind. Sind die entsprechenden Enden der Röhrchen in passende Ausnehmungen eingeführt, wird der genannte Verdrehschutz erreicht. Das gesamte Trägerelement 11 ist im übrigen derart ausgestaltet, daß es mittels Federhaken 14 und diesen entsprechenden Vorsprüngen 15 im Funktionsteil 2 lösbar befestigt werden kann.

Damit wird die Möglichkeit erzielt, das Funktionsteil 2 der Paneldose mit all seinen Funktionseinrichtungen, wie Bypass-Dioden, Anschlußkabeln 3 und Anschlußeinrichtungen 6, vollständig vorzukonfigurieren und elektrisch "endzuprüfen", so daß auf ein an dem Photovoltaik-Modul angebrachtes Basisteil 1 nur noch dieses vorkonfektionierte Funktionsteil 2 aufgesetzt werden muß, ohne daß weitere Arbeiten erfolgen müssen. Dies ist insbesondere insofern vorteilhaft, als daß, wie oben schon angedeutet, die Photovoltaik-Module einer Solaranlage im allgemeinen an nur schwer und gegebenenfalls auch unter Gefahr zugänglichen Bereichen angeordnet sind, wie auf Hausdächern, so daß auf diese Weise die dort zu erfolgende Arbeit auf ein Minimum reduziert wird. Insbesondere kann dazu das Basisteil 1 nämlich auch schon auf dem Photovoltaik-Modul vorinstalliert sein

Wie aus Fig. 3 ersichtlich, weist das Basisteil 1 eine umlaufende Dichtung 16 auf. Wird das Funktionsteil 2 auf das Basisteil 1 aufgesetzt, so wirkt die Dichtung 16 seitlich gegen die Seitenwände 17 des Funktionsteils 2. Dabei kommt das Funktionsteil 2 jedoch nicht direkt mit dem Basisteil 1 in Kontakt, da das Funktionsteil 2 Rippen 18 aufweist, mit denen es auf der Dichtung 16 aufliegt. Damit ergibt sich eine federnde Lagerung des Funktionsteils 2 auf dem Basisteil 1, so daß ein auf das Funktionsteil 2 einwirkender Stoß durch die Dichtung 16 in gewissem Maße abgefedert wird. Insbesondere bei tiefen Temperaturen und entsprechend sprödem Material können auf diese Weise unter Umständen Beschädigungen des Funktionsteils 2 und seiner Komponenten aber auch des Basisteils 1 bei entsprechender mechanischer Belastung vermieden werden.

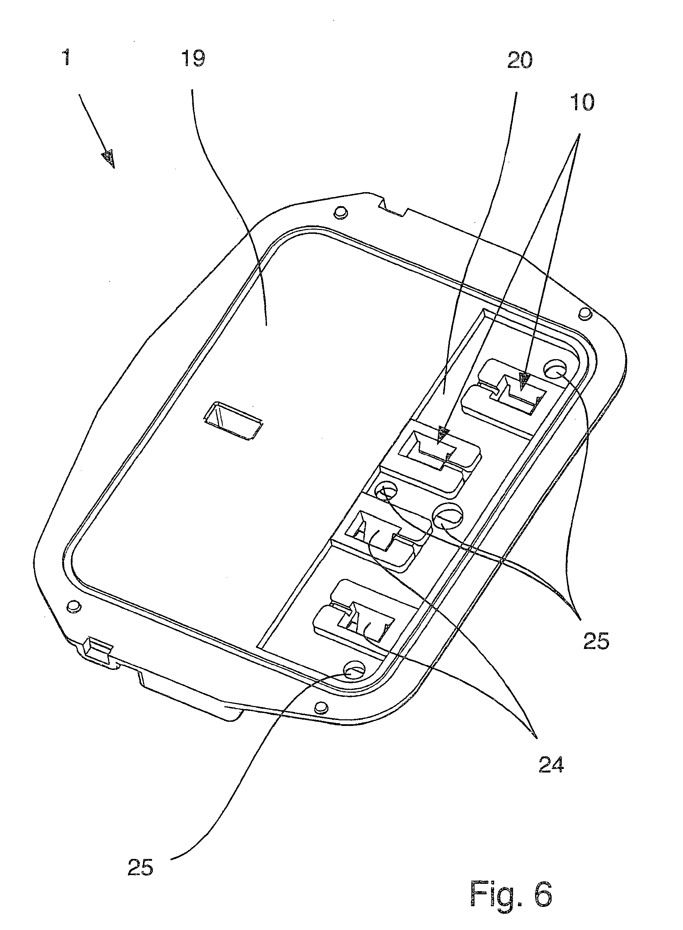

Aus Fig. 6 ist die zur Anbringung auf dem Photovoltaik-Modul vorgesehene Seite des Basisteils 1 ersichtlich. Auf seiner zur Anbringung auf dem Photovoltaik-Modul vorgesehenen Seite weist das Basisteil 1 einen Boden 19 auf, in dem eine vergießbare, dem Photovoltaik-Modul zugewandte Ausnehmung 20 vorgesehen ist. Diese Ausnehmung ist derart angeordnet, daß bei auf dem Photovoltaik-Modul angebrachtem Basisteil 1 der Austrittsbereich der Anschlußleitungen aus dem Photovoltaik-Modul vergießbar ist. Da beim Herausführen der Anschlußleitungen aus dem Photovoltaik-Modul eine Schutzschicht, die auch zur Abdichtung des Photovoltaik-Moduls dient, verletzt wird, kann auf diese Weise sichergestellt werden, daß die Abdichtung des Photovoltaik-Moduls erhalten bleibt und keine Feuchtigkeit eindringt. Vorliegend ist dabei vorgesehen, daß die vergießbare Ausnehmung 20 auch die in dem Boden 19 des Basisteils 1 vorgesehenen Durchgangsöffnungen 10 umfaßt, so daß die Durchgangsöffnungen 10 mitausgegossen und damit abgedichtet werden. Um die Vergießbarkeit der Ausnehmung 20 auch bei auf dem Photovoltaik-Modul aufgesetztem Basisteil 1 zu gewährleisten, sind im Boden 19 das Basisteils zusätzliche Öffnungen 25 vorgesehen, die zum Zuführen des Vergießmittels bzw. als Steiger verwendet werden können.

Damit die Paneldose teilweise z.B. unter einen das Photovoltaik-Modul begrenzenden Metallrahmen geschoben werden kann, so daß eine möglichst randnahe und damit platzsparende Installation auf dem Photovoltaik-Modul erzielt wird, ist die Höhe des Funktionsteils 2 in einem Randbereich 21 geringer ist als in seinem restlichen Bereich. Das Funktionsteil weist also einen Absatz 22 auf. Damit ist auch verbunden, daß gemäß dem vorliegend beschriebenen bevorzugten Ausführungsbeispiel der Erfindung die als Röhrchen vorgesehenen Anschlußeinrichtungen 6 nicht gerade verlaufen, sondern einen Bereich 23 aufweisen, in dem eine Achsverschiebung vorgesehen ist.

## Patentansprüche

1. Paneldose, zum elektrischen Anschluß eines Photovoltaik-Moduls für eine Solaranlage, mit einem Basisteil (1) zum Anbringen auf dem Photovoltaik-Modul und zum elektrischen Anschließen einer Anschlußleitung (3) des Photovoltaik-Moduls, **dadurch gekennzeichnet, daß** das Basisteil (1) auf seiner zur Anbringung auf dem Photovoltaik-Modul vorgesehenen Seite einen Boden (19) mit einer vergießbaren, dem Photovoltaik-Modul zugewandten Ausnehmung (20) aufweist, wobei im Boden (19) des Basisteils (1) eine Durchgangsöffnung (10) zum Durchführen der Anschlußleitung des Photovoltaik-Moduls vorgesehen ist und die Durchgangsöffnung (10) vergießbar im Bereich der vergießbaren Ausnehmung (20) angeordnet ist, und wobei der Boden (19) eine zusätzliche Öffnung (25) aufweist, die zum Zuführen des Vergussmaterials auch bei auf dem Photovoltaik-Modul aufgesetztem Basisteil (1) verwendbar ist.

2. Paneldose nach Anspruch 1, **dadurch gekennzeichnet, daß** die vergießbare Ausnehmung (20) derart angeordnet ist, daß bei auf dem Photovoltaik-Modul angebrachtem Basisteil (1) der Austrittsbereich der Anschlußleitung aus dem Photovoltaik-Modul vergießbar ist.

3. Paneldose nach einem der vorhergehenden Ansprüche, **dadurch gekennzeichnet, daß** in der Durchgangsöffnung (10) eine Umlenkzunge (24) vorgesehen ist, die derart angeordnet und ausgebildet ist, daß die Anschlußleitung beim Einführen in die Durchgangsöffnung (10) umgelenkt wird.

4. Paneldose nach einem der vorhergehenden Ansprüche, **dadurch gekennzeichnet, daß** ein weiteres Teil zum Aufsetzen auf das Basisteil (1) vorgesehen ist, wobei das weitere Teil als Funktionsteil (2) ausgestaltet ist, das wenigstens eine eine elektrische und/oder elektronische Funktion übernehmende Funktionseinrichtung aufweist.

5. Paneldose nach Anspruch 4, **dadurch gekennzeichnet, daß** die Anschlußeinrichtung (6) ein Röhrchen aufweist, in das eine Leitungsader des Anschlußkabels eingeführt ist.

6. Paneldose nach Anspruch 5, **dadurch gekennzeichnet, daß** die Leitungsader im Röhrchen mittels einer Verkrimpung elektrisch kontaktiert und vorzugsweise auch gehalten ist.

7. Paneldose nach einem der vorhergehenden Ansprüche, **dadurch gekennzeichnet, daß** im Basisteil (1) zum elektrischen Anschließen der Anschlußleitung des Photovoltaik-Moduls eine Verbindungseinrichtung (8) vorgesehen ist, mittels derer die Anschlußeinrichtung (6) mit der Anschlußleitung verbindbar ist.

8. Paneldose, zum elektrischen Anschluß eines Photovoltaik-Moduls für eine Solaranlage, mit einem Basisteil (1) zum Anbringen auf dem Photovoltaik-Modul und zum elektrischen Anschließen einer Anschlußleitung des Photovoltaik-Moduls und mit einem weiteren Teil zum Aufsetzen auf das Basisteil (1), nach einem der vorhergehenden Ansprüche, **dadurch gekennzeichnet, daß** zur Abdichtung der Paneldose zwischen dem Basisteil (1) und dem weiteren Teil eine Dichtung (16) vorgesehen ist, die derart ausgebildet und angeordnet ist, daß ein auf das weitere Teil ausgeübter Stoß abgefedert wird.

9. Paneldose nach Anspruch 8, **dadurch gekennzeichnet, daß** die Dichtung (16) seitlich gegen die Seitenwände (17) des weiteren Teils abdichtet und das weitere Teil Rippen (18) aufweist, mit denen es derart auf der Dichtung (16) aufliegt, daß sich die Seitenwände (17) des weiteren Teils im Abstand zum Basisteil (1) befinden.

## Claims

1. A junction box, for electrically connecting a photovoltaic module for a solar system, comprising a main part (1) for attachment on the photovoltaic module and for electrically connecting a connecting line (3) of the photovoltaic module, **characterized in that** the side of the main part (1) that is provided for attachment on the photovoltaic module comprises a bottom (19) having a pottable cut-out (2) facing the photovoltaic module, wherein a through-passage (10) for passing through the connecting line of the photovoltaic module is provided in the bottom (19) of the main part (1) and the through-passage (10) is arranged in the region of the pottable cut-out (20) in a pottable manner, and wherein the bottom (19) comprises an additional opening (25), which can be used to supply the potting material, even if the main part (1) has been placed on the photovoltaic module.

2. The junction box according to claim 1, **characterized in that** the pottable cut-out (20) is arranged such that the exit region of the connecting line out of the photovoltaic module can be potted when the main part (1) is attached on the photovoltaic module.

3. A junction box according to any one of the preceding claims, **characterized in that** a deflection tongue (24) is provided in the through-passage (10), the tongue being arranged and designed such that the connecting line is deflected when it is inserted in the through-passage (10).

4. A junction box according to any one of the preceding claims, **characterized in that** an additional part for placement on the main part (1) is provided, wherein the additional part is designed as a functional part (2), which has at least one functional device that assumes an electric and/or electronic function.

5. The junction box according to claim 4, **characterized in that** the connection device (6) comprises small tubes in which one conductor of the connecting cable is introduced.

6. The junction box according to claim 5, **characterized in that** the conductor is electrically contacted, and preferably also held, in the small tube by means of a crimping.

7. A junction box according to any one of the preceding claims, **characterized in that** a joining device (8), by means of which the connecting device (6) can be joined to the connecting line, is provided in the main part (1) for electrically connecting the connecting line of the photovoltaic module.

8. A junction box, for electrically connecting a photovoltaic module for a solar system, comprising a main part (1) for attachment on the photovoltaic module and for electrically connecting a connecting line (3) of the photovoltaic module, and further comprising an additional part for placement on the main part (1), according to any one of the preceding claims, **characterized in that** a gasket (16), which is designed and arranged such that impact that is exerted on the additional part is absorbed, is provided between the main part (1) and the additional part for the purpose of sealing the junction box

9. The junction box according to claim 8, **characterized in that** the gasket (16) seals laterally against the side walls (17) of the additional part and that the additional part comprises ribs (18), by means of which it is seated on the gasket (16) such that the side walls (17) of the additional part are located at a distance from the main part (1).

## Revendications

1. Boîte de raccordement, destinée au raccordement électrique d'un module photovoltaïque pour une installation solaire, avec une pièce de base (1) destinée à être appliquée sur le module photovoltaïque et à raccorder électriquement une ligne de raccordement (3) du module photovoltaïque, **caractérisée en ce que** la pièce de base (1) comporte, de son côté destiné à être appliqué sur le module photovoltaïque, un fond (19) avec un évidement (20) coulable, tourné vers le module photovoltaïque, dans laquelle une ouverture de passage (10) est prévue dans le fond (19) de la pièce de base (1), pour le passage de la ligne de raccordement du module photovoltaïque, et l'ouverture de passage (10) est agencé de manière à pouvoir être coulé dans la région de l'évidement coulable (20), et dans laquelle le fond (19) comporte une ouverture supplémentaire (25), utilisable pour l'alimentation du matériau de coulage, même lorsque la pièce de base (1) est montée sur le module photovoltaïque.

2. Boîte de raccordement selon la revendication 1, **caractérisée en ce que** l'évidement coulable (20) est agencé de manière à ce que la région de sortie de la ligne de raccordement hors du module photovoltaïque puisse être coulée lorsque la pièce de base (1) est montée sur le module photovoltaïque.

3. Boîte de raccordement selon l'une des revendications précédentes, **caractérisée en ce que** dans l'ouverture de passage (10), il est prévu une langue de déviation (24) agencée et conçue de manière ce que la ligne de raccordement soit déviée lors de son introduction dans l'ouverture de passage (10).

4. Boîte de raccordement selon l'une des revendications précédentes, **caractérisée en ce qu'**il est prévu une autre pièce destinée à être montée sur la pièce de base (1), dans laquelle l'autre pièce est conçue comme une pièce fonctionnelle (2), comportant au moins un dispositif fonctionnel assurant une fonction électrique et/ou électronique.

5. Boîte de raccordement selon la revendication 4, **caractérisée en ce que** le dispositif de raccordement (6) comporte un petit tube, dans lequel est introduit un brin du câble de raccordement.

6. Boîte de raccordement selon la revendication 5, **caractérisée en ce que** le brin dans le petit tube est mis en contact électrique au moyen d'un sertissage, et de préférence maintenu ainsi.

7. Boîte de raccordement selon l'une des revendications précédentes, **caractérisée en ce que** dans la pièce de base (1), il est prévu un dispositif de raccordement (8) pour le raccordement électrique de la ligne de raccordement (3) du module photovoltaïque, au moyen duquel le dispositif de raccordement peut être relié à la ligne de raccordement (3).

8. Boîte de raccordement destinée au raccordement électrique d'un module photovoltaïque pour une installation solaire, avec une pièce de base (1) destinée à être appliquée sur le module photovoltaïque et à raccorder électriquement une ligne de raccordement du module photovoltaïque, et avec une autre pièce destinée à être montée sur la pièce de base (1), selon l'une des revendications précédentes, **caractérisée en ce que** pour l'isolation de la boîte de raccordement entre la pièce de base (1) et l'autre pièce, il est prévu un joint d'étanchéité (16) conçu et agencé de manière à amortir un choc exercé sur l'autre pièce.

9. Boîte de raccordement selon la revendication 8, **caractérisée en ce que** le joint d'étanchéité (16) isole latéralement contre les parois latérales (17) de l'autre pièce, et **en ce que** l'autre pièce comporte des nervures (18) avec lesquelles elle repose de telle manière sur le joint d'étanchéité (16), que les parois latérales de l'autre pièce se trouvent à distance de la pièce de base (1).
